# FASCICULE DE BREVET EUROPEEN

(11) **EP 2 736 796 B1**
(45) Date de publication et mention de la délivrance du brevet: **25.11.2015**
(21) Numéro de dépôt: 12744104.6
(22) Date de dépôt: 24.07.2012
(51) Int. Cl.: B62K 3/00, B62K 15/00

(54) **VEHICULE, PAR EXEMPLE DU TYPE TROTTINETTE, AVEC SYSTEME DE REPLIAGE**
FAHRZEUG, ZUM BEISPIEL ROLLER, MIT EINEM SYSTEM ZUM ZUSAMMENKLAPPEN
VEHICLE, FOR EXAMPLE OF THE SCOOTER TYPE, WITH A COLLAPSING SYSTEM

(30) Priorité: 26.07.2011 FR 1156809
(43) Date de publication de la demande: 04.06.2014
(73) Titulaire: Decathlon, 59650 Villeneuve d'Ascq (FR)
(72) Inventeur: FERRET, Patrick, F-59166 Bousbecque (FR)
(74) Mandataire: Balesta, Pierre
(86) Numéro de dépôt international: PCT/FR2012/051761
(87) Numéro de publication internationale: WO 2013/014391

(56) Documents cités:
- DE-U1- 20 100 486
- GB-A- 174 175
- US-A1- 2002 105 158

## Description

L'invention a pour objet un véhicule avec système de repliage, et trouve une application au domaine des véhicules de type trottinette repliable.

Le système de repliage, pour un tel véhicule, permet bien sûr de réduire son encombrement afin de le ranger, mais également de le porter facilement.

On connaît des véhicule de type trottinette tels que le véhicule décrit dans US 6 270 097, comprenant un châssis relié à un ensemble de direction à pivotement autour d'un axe de pivotement, de sorte que le véhicule peut se présenter dans une première configuration d'utilisation, permettant le déplacement du véhicule et de son utilisateur, et dans une deuxième configuration repliée dans laquelle le châssis est ramené contre l'ensemble de direction par pivotement.

On connaît également du document GB 174 175, qui décrit l'état de la technique le plus proche, un véhicule du type trottinette comportant un châssis présentant une partie support destinée à supporter l'utilisateur et qui se prolonge en direction de l'ensemble de direction en une partie avant s'étendant au-delà de l'axe de pivotement et de la colonne de direction.

Le pliage est donc une fonction essentielle qui est obtenue en permettant le pivotement du châssis par rapport à l'ensemble de direction.

Ce pivotement doit bien sûr être interdit en configuration d'utilisation, notamment pour éviter le repliage en cours de déplacement.

Dans les dispositifs tels que celui décrit dans US 6 270 097, le pivotement est verrouillable ou déverrouillable mécaniquement par un système relativement complexe, tel que par exemple décrit dans les figures 2 à 6 de ce document.

Dans le document GB 174 175, le pivotement est verrouillé en configuration d'utilisation par un système de leviers articulés.

Plus généralement, on connaît des solutions visant à bloquer le pivotement, qui sont basées sur l'utilisation d'un levier de verrouillage ou déverrouillage avec levier de serrage pour réduire le jeu, d'un loquet sur ressort avec doigt d'indexation en position, ou encore d'une molette de serrage pour bloquer le pivotement.

Le problème posé par toutes ces solutions est qu'elles ne sont pas intuitives et faciles à mettre en oeuvre, notamment en raison du fait qu'elles imposent plusieurs actions de la part de l'utilisateur faisant généralement intervenir plusieurs parties du corps : l'utilisateur doit, par exemple, se baisser, déverrouiller le système à la main, plier le véhicule, verrouiller le système, se relever, etc...

En outre, ces solutions nécessitent la plupart du temps de devoir trouver la position « neutre » du système de verrouillage afin de pouvoir l'actionner. Cela nécessite de supprimer les contraintes qui s'exercent sur le système de verrouillage, telles que le poids de l'ensemble de direction ou le poids du châssis.

Par ailleurs, à l'utilisation, de telles solutions ont tendance à prendre du jeu. Pour résoudre ce problème, on peut adjoindre des systèmes de serrage. Mais de tels systèmes compliquent encore plus la mise en oeuvre du repliage et du dépliage du véhicule.

L'invention a donc pour objet de résoudre les problèmes précités, parmi d'autres problèmes.

L'invention se rapporte ainsi à un véhicule, par exemple de type trottinette, comprenant un châssis apte à supporter directement ou indirectement un utilisateur et un ensemble de direction comprenant au moins une colonne de direction. La colonne de direction s'étend selon un axe longitudinal.

Le véhicule peut se présenter dans une configuration d'utilisation dans laquelle le châssis forme un premier angle non nul avec la colonne de direction et dans une configuration repliée dans laquelle le châssis forme un deuxième angle inférieur au premier angle avec la colonne de direction.

Le châssis est relié à l'ensemble de direction à pivotement autour d'au moins un axe de pivotement.

Ce châssis présente une partie support destinée à supporter directement ou indirectement l'utilisateur, qui se prolonge en direction de l'ensemble de direction en une partie avant au-delà de l'axe de pivotement et de la colonne de direction, de sorte qu'une pression sur la partie avant permet de passer de la configuration d'utilisation à la configuration repliée par pivotement autour de l'axe de pivotement.

Dans une première variante de réalisation, la partie avant forme un angle non nul et non plat avec la partie support, de préférence un angle compris entre 110° et 140°.

Alternativement, la partie avant peut être sensiblement alignée avec la partie support.

Dans une deuxième variante de réalisation, éventuellement en combinaison avec l'une ou l'autre des deux alternatives précédentes, le châssis est relié à l'ensemble de direction par l'intermédiaire d'un élément de liaison présentant une première extrémité reliée à la colonne de direction et une deuxième extrémité reliée à pivotement au châssis autour de l'axe de pivotement.

Dans cette deuxième variante, en configuration d'utilisation, la partie avant peut être disposée sensiblement parallèlement à l'élément de liaison.

Egalement dans cette deuxième variante, en configuration repliée, la partie avant peut former un angle non nul avec l'élément de liaison, de préférence un angle compris entre 60° et 100°, voire entre 85° et 95°.

Selon l'invention, le véhicule comprend un dispositif de verrouillage apte à bloquer le pivotement du châssis par rapport à l'ensemble de direction autour de l'axe de pivotement en configuration d'utilisation.

Le dispositif de verrouillage est apte à permettre automatiquement le blocage du pivotement, lorsque la configuration d'utilisation est atteinte et/ou lorsque la configuration repliée est atteinte.

Le dispositif de verrouillage comprend un moyen de déverrouillage apte à coopérer avec l'ensemble de direction, éventuellement par l'intermédiaire de l'élément de liaison, pour verrouiller ou déverrouiller le pivotement. Le moyen de déverrouillage est disposé en partie avant de la partie support du châssis.

Il s'agit avantageusement d'une pédale actionnable au pied de l'utilisateur.

Avantageusement, ce moyen de déverrouillage comprend en outre au moins un actionneur, tel qu'un bouton pression, disposé de préférence en partie haute de l'ensemble de direction, par exemple sur un guidon ou un pommeau de direction.

Selon une variante, ce moyen de déverrouillage comporte une commande à distance.

Une telle pédale peut par exemple coopérer d'une part avec le châssis et d'autre part avec l'ensemble de direction, éventuellement par l'intermédiaire de l'élément de liaison, de sorte qu'une action au pied par l'utilisateur entraîne d'abord le déverrouillage puis le pivotement du châssis.

Cette pédale est de préférence disposée à l'avant de la partie avant du châssis, ou latéralement à cette partie avant du châssis.

Dans une quatrième variante, éventuellement en combinaison avec une ou plusieurs des précédentes, la partie avant du châssis constitue, en configuration repliée, un élément d'appui sur une surface d'appui pour le véhicule.

Dans une cinquième variante, éventuellement en combinaison avec une ou plusieurs des précédentes, la colonne de direction supporte par l'une de ses deux extrémités au moins une pièce de déplacement, telle qu'une roue ou un patin de glisse, apte à être en contact avec une surface d'appui et à permettre le déplacement du véhicule sur cette surface d'appui lorsque ce véhicule est mis en mouvement.

Dans une sixième variante, éventuellement en combinaison avec une ou plusieurs des précédentes, le châssis supporte, de préférence par son extrémité opposée à la partie avant, au moins une pièce de déplacement, telle qu'une roue ou un patin de glisse, apte à être en contact avec une surface d'appui et à permettre le déplacement du véhicule sur cette surface d'appui lorsque ce véhicule est mis en mouvement.

D'autres caractéristiques et avantages de l'invention apparaîtront plus clairement et de manière complète à la lecture de la description ci-après des variantes préférées de réalisation, lesquelles sont données à titre d'exemples non limitatifs et en référence aux dessins annexés suivants :
- figure **1** **:** représente schématiquement un premier exemple de véhicule selon l'invention, en configuration d'utilisation,
- figure **2** **:** représente schématiquement le détail de la partie avant de l'exemple de la figure **1****,**
- figure **3** **:** représente schématiquement l'exemple de la figure **1****,** en configuration repliée,
- figure **4** **:** représente schématiquement un autre exemple de véhicule selon l'invention.

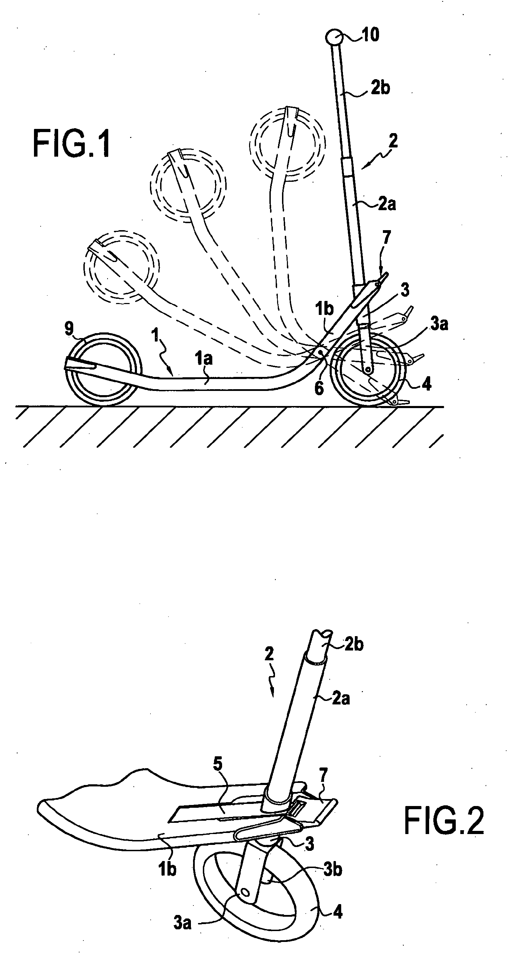

L'exemple représenté à la figure **1** correspond à un véhicule de type trottinette avec un ensemble de direction **2, 3, 4** relié à un châssis **1** pouvant supporter un utilisateur.

L'ensemble de direction comprend une colonne de direction **2** supportant une pièce de déplacement **4,** directement ou par l'intermédiaire d'une fourche **3** avec deux branches latérales **3a, 3b** (la branche **3b** n'étant visible que sur la figure **2**), ou encore d'une autre pièce de liaison.

Tel que représenté sur les différentes figures, la colonne de direction **2** s'étend selon un axe longitudinal.

Cette pièce de déplacement peut bien sûr être classiquement une roue **4,** tel que représenté à la figure **1****.** Il peut aussi s'agir d'un patin permettant au véhicule de glisser sur une surface d'appui, ou de toute autre pièce apte à être mise en contact avec la surface d'appui, et permettant la mise en mouvement du véhicule par rapport à, et sur, cette surface d'appui.

La colonne de direction **2** peut comprendre un tube de base **2a** dans lequel coulisse un tube supérieur **2b** surmonté d'un guidon **10,** ou d'un pommeau de direction **10,** ou de tout élément permettant de faciliter l'action de l'utilisateur sur l'ensemble de direction **2, 3, 4.**

L'assemblage de la colonne de direction **2** avec un tube de base **2a** dans lequel coulisse le tube supérieur **2b** permet notamment de régler la hauteur de cet ensemble de direction **2, 3, 4.**

Le châssis **1** est de préférence également pourvu d'une pièce de déplacement **9,** qui prend là encore la forme d'une roue **9,** telle que représentée à la figure **1****,** mais qui pourrait tout aussi bien être un patin de glisse.

Ce châssis **1** se décompose en une partie support **1a,** destinée à former un support direct ou indirect pour l'utilisateur, et une partie avant **1b.**

Précisément, la partie support **1a** se prolonge en direction de l'ensemble de direction **2, 3, 4,** en la partie avant **1b.**

Tel que représenté sur les différentes figures, la partie avant **1b** comporte une extrémité opposée à la partie support **1a** du châssis **1** s'étendant au-delà de la colonne de direction **2,** et plus précisément au-delà de l'axe longitudinal de la colonne de direction.

Le châssis **1** est relié à pivotement à l'ensemble de direction **2, 3, 4,** autour d'au moins un axe de pivotement **6.**

Le prolongement de la partie support **1a** du châssis **1** en la partie avant **1b,** est réalisé au-delà de l'axe de pivotement, et au-delà de la colonne de direction.

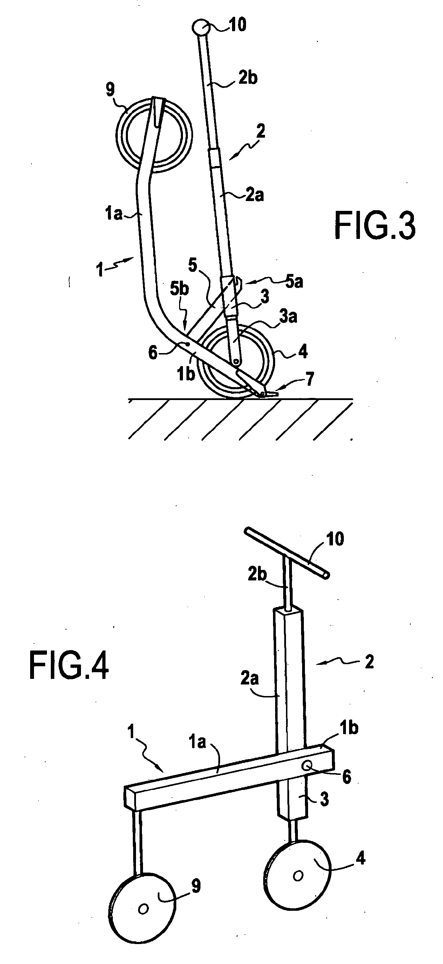

Ainsi, une simple pression sur la partie avant **1b** du châssis permet de passer de la configuration d'utilisation, telle que représentée à la figure **1****,** à la configuration repliée, telle que représentée à la figure **3** et qui sera décrite plus loin en référence à cette figure **3****.**

Ce passage de la configuration d'utilisation à la configuration repliée est obtenu par pivotement du châssis **1** autour de l'axe de pivotement **6** par rapport à l'ensemble de direction **2, 3, 4.**

Ce passage a été schématisé sur la figure **1** en représentant trois positions intermédiaires successives en pointillés.

Dans cet exemple représenté à la figure **1****,** la partie avant **1b** et la partie support **1a** forment un angle de préférence compris entre 110° et 140°, voire 130°.

Ainsi, la partie avant **1b** s'étend au dessus du dispositif de déplacement **4,** en l'espèce de la roue avant **4.**

Alternativement, tel que représenté à la figure **4** de façon très simplifiée comparativement à la représentation en figure **1****,** le châssis **1** comprend une partie support **1a** et une partie avant **1b** qui sont sensiblement alignées.

Un dispositif de verrouillage **7** est prévu, permettant de bloquer le pivotement du châssis **1** par rapport à l'ensemble de direction **2, 3, 4,** notamment pour des raisons de sécurité en configuration d'utilisation, mais également pour permettre le blocage en configuration repliée sans dépliage accidentel.

De préférence, ce dispositif de verrouillage **7** permet le blocage automatique du pivotement du châssis **1** par rapport à l'ensemble de direction **2, 3, 4** lorsque la configuration d'utilisation est atteinte et/ou lorsque la configuration repliée est atteinte.

Ce dispositif de verrouillage **7** comprend notamment un moyen de déverrouillage **7,** qui est apte à coopérer avec l'ensemble de direction **2, 3, 4,** directement ou indirectement, pour verrouiller ou déverrouiller le pivotement du châssis **1** par rapport à l'ensemble de direction **2, 3, 4.**

Tel que représenté sur les différentes figures, le moyen de déverrouillage **7** est monté sur l'extrémité de la partie avant **1b** opposée à la partie support **1a** du châssis **1** et s'étend au-delà de l'axe longitudinal défini par la colonne de direction **2.** Dans la configuration d'utilisation de la trottinette, le moyen de déverrouillage **7** se situe au-dessus de la pièce de déplacement **4.**

Le moyen de déverrouillage, dans cet exemple, s'étend vers le haut au-delà de la colonne de direction, de manière à être facilement actionnable par l'utilisateur, notamment par une poussée dirigée vers le bas à l'aide du pied.

Tel que représenté dans l'exemple de la figure **1****,** ce moyen de déverrouillage **7** peut prendre la forme d'une pédale **7** actionnable au pied par l'utilisateur. Alternativement, un ou plusieurs autres actionneurs qu'une pédale pourraient être disposés par exemple en partie haute de l'ensemble de direction **2, 3, 4.**

Il pourrait s'agir d'un actionneur de type bouton pression, par exemple disposé sur ou à proximité du guidon **10** ou du pommeau de direction **10.**

Le moyen de déverrouillage pourrait aussi comprendre une commande à distance permettant d'actionner un tel actionneur ou tout autre type d'actionneur. Dans le cas de la pédale **7** représentée à la figure **1****,** celle-ci coopère d'une part avec le châssis **1** et, d'autre part, directement ou indirectement, avec l'ensemble de direction **2, 3, 4.**

Cette pédale est de préférence configurée pour qu'une action au pied par l'utilisateur sur cette pédale **7** entraîne, au moyen d'une unique action réalisée par l'utilisateur, d'abord le déverrouillage puis le pivotement du châssis **1** par rapport à l'ensemble de direction **2, 3, 4.**

Cette pédale est disposée à l'avant du châssis **1,** précisément à l'avant de la partie avant **1b** du châssis **1,** tel que représenté à la figure **1****,** ou latéralement à cette partie avant **1b** du châssis **1.**

Comme on peut le voir sur la vue de détail de la partie avant représentée à la figure **2****,** toujours en configuration d'utilisation, le châssis **1** est dans cet exemple relié indirectement à l'ensemble de direction **2, 3, 4,** par l'intermédiaire d'un élément de liaison **5.** L'élément de liaison **5** est donc fixé à la colonne de direction et monté pivotant par rapport au châssis autour de l'axe de pivotement **6.**

Tel que cela apparaît en particulier à l'observation de la figure **2****,** l'extrémité de la partie avant **1b** opposée à la partie support **1a** du châssis **1** présente une forme de U ouvert dans la direction de l'extrémité de la partie avant **1b ;** l'élément de liaison **5** est contenu dans l'extrémité en forme de U.

Plus précisément, cet élément de liaison **5** présente une première extrémité **5a** reliée à la colonne de direction **2,** et une extrémité opposée **5b** reliée à pivotement au châssis **1** autour de l'axe de pivotement **6.**

Dans la configuration d'utilisation, et tel que représenté sur la figure **2****,** la première extrémité **5a** de l'élément de liaison **5** porte un organe de verrouillage, par exemple mais non exclusivement un crochet, destiné à coopérer avec le dispositif de verrouillage **7,** ce dernier étant monté à l'extrémité de la partie avant **1b** du châssis **1.**

Dans cette variante, le dispositif de verrouillage **7** bloque donc le pivotement du châssis **1** par rapport à l'ensemble de direction **2, 3, 4,** de façon indirecte, c'est-à-dire par l'intermédiaire d'un blocage du pivotement par rapport à l'élément de liaison **5.**

Par ailleurs, le moyen de déverrouillage **7** compris dans le dispositif de verrouillage **7** coopère, pour verrouiller ou déverrouiller le pivotement, avec l'ensemble de direction **2, 3, 4** de façon indirecte, c'est-à-dire par l'intermédiaire d'une coopération avec l'élément de liaison **5.**

Dans cette variante avec la présence de l'élément de liaison **5,** la partie avant **1b** du châssis **1** se trouve, en configuration d'utilisation, disposée sensiblement parallèlement à cet élément de liaison, tel que représenté à la figure **2****.**

Dans cette variante, lorsque la trottinette se trouve dans la configuration d'utilisation, le moyen de déverrouillage **7** est situé au-delà de l'axe de pivotement **6,** et au-delà de l'axe longitudinal défini par la colonne de direction **2,** de telle sorte que l'actionnement du moyen de déverrouillage **7,** par exemple et de manière non limitative par le pied de l'utilisateur, permet, successivement et dans une même action, de déverrouiller puis de pivoter le châssis **7** par rapport à l'ensemble de direction **2, 3, 4** pour passer, au moyen d'une unique action réalisée par l'utilisateur, de la configuration d'utilisation vers la configuration repliée.

Dans cet exemple, la pression exercée sur le moyen de déverrouillage est dirigée vers la pièce de déplacement (la roue) vers le sol.

Par ailleurs, toujours dans cette variante avec la présence de l'élément de liaison **5,** la partie avant **1b** du châssis **1** se trouve, en configuration repliée, disposée de sorte à former un angle non nul avec cet élément de liaison **5,** tel que représenté à la figure **3****.** Cet angle est de préférence compris entre 60° et 100°, voire entre 85° et 95°. Une valeur égale à ou, proche de, 90° donne des résultats particulièrement satisfaisants.

Tel que cela apparaît en particulier à l'observation de la figure **3****,** lorsque la trottinette se trouve dans la configuration repliée, l'extrémité de la partie avant **1b** opposée à la partie support **1a** du châssis **1** et/ou le dispositif de verrouillage **7** constituent un élément d'appui sur une surface d'appui pour la trottinette.

La présence d'un tel élément de liaison **5** permet notamment d'éloigner l'axe de pivotement **6** de la partie avant **1b** du châssis **1,** et d'obtenir ainsi un levier plus important pour le passage de la configuration d'utilisation à la configuration repliée.

Cet élément de liaison **5** permet aussi d'éloigner l'axe de pivotement **6** du système de verrouillage et donc de limiter les jeux au niveau du système de verrouillage. Ceci permet d'éviter d'avoir à adjoindre un système de reprise des jeux.

La figure **3** met également en évidence le fait que, dans cet exemple de réalisation, la partie avant **1b** du châssis **1** constitue, dans cette configuration repliée, un élément d'appui sur la surface d'appui pour le déplacement du véhicule.

Lorsque le dispositif de verrouillage **7,** et notamment le moyen de déverrouillage **7,** est disposé à l'avant de la partie avant **1a** du châssis **1,** ce moyen de déverrouillage **7** participe alors à l'appui décrit au paragraphe précédent.

Il est rappelé que l'ensemble de la description ci-dessus est donné à titre d'exemple, et n'est donc pas limitatif de l'invention.

## Revendications

1. Véhicule, par exemple de type trottinette, comprenant un châssis (1) apte à supporter directement ou indirectement un utilisateur et un ensemble de direction (2, 3, 4) comprenant au moins une colonne de direction (2), ledit véhicule pouvant se présenter dans une configuration d'utilisation dans laquelle le châssis (1) forme un premier angle non nul avec la colonne de direction (2) et dans une configuration repliée dans laquelle le châssis (1) forme un deuxième angle inférieur audit premier angle avec la colonne de direction (2), ledit châssis (1) étant relié audit ensemble de direction (2, 3, 4) à pivotement autour d'au moins un axe de pivotement (6), le châssis (1) présentant une partie support (1a) destinée à supporter directement ou indirectement l'utilisateur et qui se prolonge en direction de l'ensemble de direction (2, 3, 4) en une partie avant (1b) s'étendant au-delà de l'axe de pivotement et de la colonne de direction, , le véhicule comportant en outre un dispositif de verrouillage pour bloquer le pivotement du châssis par rapport à l'ensemble de direction autour de l'axe de pivotement en configuration d'utilisation, ledit dispositif de verrouillage comprenant un moyen de déverrouillage (7) apte à coopérer avec l'ensemble de direction (2, 3, 4) pour verrouiller ou déverrouiller le pivotement, ledit véhicule étant **caractérisé en ce que** le moyen de déverrouillage (7) est disposé en partie avant (1b) de la partie support (1a), de sorte qu'une pression sur ladite partie avant (1b) permet de passer de la configuration d'utilisation à la configuration repliée par pivotement autour de l'axe de pivotement (6).

2. Véhicule selon la revendication **1, caractérisé en ce que** la partie avant (1b) forme un angle non nul avec la partie support (1a), de préférence un angle compris entre 110° et 140°.

3. Véhicule selon la revendication **1, caractérisé en ce que** la partie avant (1b) est sensiblement alignée avec la partie support (1a).

4. Véhicule selon l'une quelconque des revendications **1 à 3, caractérisé en ce que** la partie avant (1b) s'étend au-delà de l'axe de pivotement (6) et de la colonne de direction (2) dans au moins une position intermédiaire entre la configuration d'utilisation et la configuration repliée.

5. Véhicule selon l'une quelconque des revendications **1 à 4, caractérisé en ce que** le dispositif de verrouillage est également configuré pour bloquer le pivotement du châssis (1) par rapport à l'ensemble de direction (2, 3, 4) autour de l'axe de pivotement (6) lorsque le véhicule se trouve dans la configuration repliée.

6. Véhicule selon l'une quelconque des revendication **1 à 5, caractérisé en ce que** le châssis (1) est relié à l'ensemble de direction (2, 3, 4) par l'intermédiaire d'un élément de liaison (5) présentant une première extrémité (5a) reliée à la colonne de direction (2) et une deuxième extrémité (5b) reliée à pivotement au châssis (1) autour de l'axe de pivotement (6).

7. Véhicule selon la revendication **6, caractérisé en ce qu'**en configuration d'utilisation, la partie avant (1b) est disposée sensiblement parallèlement à l'élément de liaison (5).

8. Véhicule selon l'une quelconque des revendications **6** et **7, caractérisé en ce qu'**en configuration repliée, la partie avant (1b) forme un angle non nul et non plat avec l'élément de liaison (5), de préférence un angle compris entre 60° et 100°, voire entre 85° et 95°.

9. Véhicule selon l'une quelconque des revendications **1 à 8, caractérisé en ce que** le dispositif de verrouillage (7) est agencé pour permettre automatiquement le blocage du pivotement, lorsque la configuration d'utilisation est atteinte et/ou lorsque la configuration repliée est atteinte.

10. Véhicule selon l'une quelconque des revendications **1 à 9** et selon la revendication 6, **caractérisé en ce que** le moyen de déverrouillage (7) coopère avec l'ensemble de direction (2, 3, 4) par l'intermédiaire de l'élément de liaison (5).

11. Véhicule selon l'une quelconque des revendications **1 à 10, caractérisé en ce que** le moyen de déverrouillage comporte au moins un actionneur, tel qu'un bouton pression, disposé de préférence en partie haute de l'ensemble de direction (2, 3, 4).

12. Véhicule selon l'une quelconque des revendications **1 à 11, caractérisé en ce que** le moyen de déverrouillage comporte une commande à distance.

13. Véhicule selon l'une quelconque des revendications **1 à 12, caractérisé en ce que** le moyen de déverrouillage comporte une pédale (7) disposée en partie avant (1b) de la partie support et actionnable au pied de l'utilisateur de sorte qu'une action au pied de l'utilisateur sur la pédale entraîne d'abord le déverrouillage puis le pivotement du châssis.

14. Véhicule selon l'une quelconque des revendications **1 à 13, caractérisé en ce que** la partie avant (1b) du châssis (1) constitue, en configuration repliée, un élément d'appui sur une surface d'appui pour le véhicule.

15. Véhicule selon l'une quelconque des revendications **1 à 14, caractérisé en ce que** la colonne de direction (2) supporte par l'une de ses deux extrémités au moins une pièce de déplacement (4), telle qu'une roue (4) ou un patin de glisse, apte à être en contact avec une surface d'appui et à permettre le déplacement dudit véhicule sur cette surface d'appui lorsque ce dit véhicule est mis en mouvement.

16. Véhicule selon l'une quelconque des revendications **1 à 15, caractérisé en ce que** le châssis (1) supporte, de préférence par son extrémité opposée à la partie avant (1b), au moins une pièce de déplacement (9), telle qu'une roue (9) ou un patin de glisse, apte à être en contact avec une surface d'appui et à permettre le déplacement dudit véhicule sur cette surface d'appui lorsque ce dit véhicule est mis en mouvement.

## Patentansprüche

1. Fahrzeug, beispielsweise vom Typ Tretroller, umfassend ein Untergestell (1), das geeignet ist, einen Benutzer direkt oder indirekt zu tragen, und eine Lenkanordnung (2, 3, 4), die wenigstens eine Lenksäule (2) umfasst, wobei das Fahrzeug in einer Gebrauchsausführung, in der das Untergestell (1) mit der Lenksäule (2) einen ersten Winkel ungleich null bildet, und in einer zusammengeklappten Ausführung, in der das Untergestell (1) mit der Lenksäule (2) einen zweiten Winkel, welcher kleiner als der erste Winkel ist, bildet, vorliegen kann, wobei das Untergestell (1) mit der Lenkanordnung (2, 3, 4) um wenigstens eine Schwenkachse (6) schwenkbar verbunden ist, wobei das Untergestell (1) einen Tragteil (1a) umfasst, der dazu bestimmt ist, den Benutzer direkt oder indirekt zu tragen und der in Richtung der Lenkanordnung (2, 3, 4) als ein vorderer Teil (1 b) fortgesetzt ist, der sich über die Schwenkachse und die Lenksäule hinaus erstreckt, wobei das Fahrzeug ferner eine Verriegelungsvorrichtung umfasst, um das Verschwenken des Untergestells gegenüber der Lenkanordnung um die Schwenkachse in der Gebrauchsausführung zu blockieren, wobei die Verriegelungsvorrichtung ein Entriegelungsmittel (7) umfasst, das geeignet ist, mit der Lenkanordnung (2, 3, 4) zusammenzuwirken, um das Verschwenken zu verriegeln oder entriegeln, wobei das Fahrzeug **dadurch gekennzeichnet ist, dass** das Entriegelungsmittel (7) im vorderen Teil (1 b) des Tragteils (1a) angeordnet ist, so dass ein Druck auf den vorderen Teil (1 b) ermöglicht, durch Verschwenken um die Schwenkachse (6) von der Gebrauchsausführung in die zusammengeklappte Ausführung überzugehen.

2. Fahrzeug nach Anspruch 1, **dadurch gekennzeichnet, dass** der vordere Teil (1 b) mit dem Tragteil (1 a) einen Winkel ungleich null, vorzugsweise einen Winkel zwischen 110° und 140° bildet.

3. Fahrzeug nach Anspruch 1, **dadurch gekennzeichnet, dass** der vordere Teil (1b) mit dem Tragteil (1a) im Wesentlichen fluchtet.

4. Fahrzeug nach einem der Ansprüche 1 bis 3, **dadurch gekennzeichnet, dass** der vordere Teil (1b) sich in wenigstens einer Zwischenstellung zwischen der Gebrauchsausführung und der zusammengeklappten Ausführung über die Schwenkachse (6) und die Lenksäule (2) hinaus erstreckt.

5. Fahrzeug nach einem der Ansprüche 1 bis 4, **dadurch gekennzeichnet, dass** die Verriegelungsvorrichtung auch dazu ausgebildet ist, das Verschwenken des Untergestells (1) gegenüber der Lenkanordnung (2, 3, 4) um die Schwenkachse (6) zu blockieren, wenn das Fahrzeug sich in der zusammengeklappten Ausführung befindet.

6. Fahrzeug nach einem der Ansprüche 1 bis 5, **dadurch gekennzeichnet, dass** das Untergestell (1) mittels eines Verbindungselements (5), das ein mit der Lenksäule (2) verbundenes erstes Ende (5a) und ein mit dem Untergestell (1) um die Schwenkachse (6) schwenkbar verbundenes zweites Ende (5b) aufweist, mit der Lenkanordnung (2, 3, 4) verbunden ist.

7. Fahrzeug nach Anspruch 6, **dadurch gekennzeichnet, dass** in der Gebrauchsausführung der vordere Teil (1b) im Wesentlichen parallel zu dem Verbindungselement (5) angeordnet ist.

8. Fahrzeug nach einem der Ansprüche 6 und 7, **dadurch gekennzeichnet, dass** in der zusammengeklappten Ausführung der vordere Teil (1 b) mit dem Verbindungselement (5) einen Winkel, der ungleich null und nicht flach ist, vorzugsweise einen Winkel zwischen 60° und 100°, sogar zwischen 85° und 95° bildet.

9. Fahrzeug nach einem der Ansprüche 1 bis 8, **dadurch gekennzeichnet, dass** die Verriegelungsvorrichtung (7) dazu eingerichtet ist, das Blockieren des Verschwenkens automatisch zu ermöglichen, wenn die Gebrauchsausführung erreicht ist und/oder wenn die zusammengeklappte Ausführung erreicht ist.

10. Fahrzeug nach einem der Ansprüche 1 bis 9 und nach Anspruch 6, **dadurch gekennzeichnet, dass** das Entriegelungsmittel (7) mit der Lenkanordnung (2, 3, 4) mittels des Verbindungselements (5) zusammenwirkt.

11. Fahrzeug nach einem der Ansprüche 1 bis 10, **dadurch gekennzeichnet, dass** das Entriegelungsmittel wenigstens ein Betätigungselement, wie einen Druckknopf, umfasst, das vorzugsweise im oberen Teil der Lenkanordnung (2, 3, 4) angeordnet ist.

12. Fahrzeug nach einem der Ansprüche 1 bis 11, **dadurch gekennzeichnet, dass** das Entriegelungsmittel eine Fernsteuerung umfasst.

13. Fahrzeug nach einem der Ansprüche 1 bis 12, **dadurch gekennzeichnet, dass** das Entriegelungsmittel ein Pedal (7) umfasst, das im vorderen Teil (1 b) des Tragteils angeordnet und mit dem Fuß des Benutzers betätigbar ist, so dass ein Einwirken mit dem Fuß des Benutzers auf das Pedal zunächst zum Entriegeln, dann zum Verschwenken des Untergestells führt.

14. Fahrzeug nach einem der Ansprüche 1 bis 13, **dadurch gekennzeichnet, dass** der vordere Teil (1 b) des Untergestells (1) in der zusammengeklappten Ausführung ein Auflageelement auf einer Auflagefläche für das Fahrzeug bildet.

15. Fahrzeug nach einem der Ansprüche 1 bis 14, **dadurch gekennzeichnet, dass** die Lenksäule (2) mit dem einen ihrer beiden Enden wenigstens ein Bewegungsteil (4), wie ein Rad (4) oder eine Gleitkufe, trägt, das geeignet ist, mit einer Auflagefläche in Kontakt zu sein und die Bewegung des Fahrzeugs auf dieser Auflagefläche zu ermöglichen, wenn dieses Fahrzeug in Bewegung versetzt wird.

16. Fahrzeug nach einem der Ansprüche 1 bis 15, **dadurch gekennzeichnet, dass** das Untergestell (1), vorzugsweise mit seinem von dem vorderen Teil (1b) abgewandten Ende, wenigstens ein Bewegungsteil (9), wie ein Rad (9) oder eine Gleitkufe, trägt, das geeignet ist, mit einer Auflagefläche in Kontakt zu sein und die Bewegung des Fahrzeugs auf dieser Auflagefläche zu ermöglichen, wenn dieses Fahrzeug in Bewegung versetzt wird.

## Claims

1. A vehicle, for example of the scooter type, comprising a chassis (1) able to directly or indirectly support a user and a steering assembly (2, 3, 4) comprising at least one steering column (2), said vehicle being able to assume a usage configuration in which the chassis (1) forms a first non-zero angle with the steering column (2) and a folded configuration in which the chassis (1) forms a second angle smaller than the first angle with the steering column (2), said chassis (1) being connected to the steering assembly (2, 3, 4) pivoting around at least one pivot axis (6), the chassis (1) having a support part (1a) intended to directly or indirectly support the user, which extends towards the steering assembly (2, 3, 4) in a front portion (1b) which extends beyond the pivot axis and the steering column, said vehicle further comprising a locking device able to block the pivoting of the chassis relative to the steering assembly around the pivot axis in the usage configuration, said locking device comprising an unlocking means (7) able to cooperate with the steering assembly (2, 3, 4) to lock or unlock the pivoting, said vehicle being **characterized in that** the unlocking means (7) is arranged at the front portion (1b) of the support part (1a), so that pressure on said front portion (1b) makes it possible to go from the usage configuration to the folded configuration by pivoting around the pivot axis (6).

2. The vehicle according to claim 1, **characterized in that** the front portion (1b) forms a non-zero angle with the support portion (1a), preferably an angle between 110° and 140°.

3. The vehicle according to claim **1, characterized in that** the front portion (1b) is substantially aligned with the support portion (1a).

4. The vehicle according to any one of claims **1 to 3, characterized in that** the front portion (1b) goes beyond the pivot axis (6) and the steering column (2) in at least an intermediate position between the usage configuration and the folded configuration.

5. The vehicle according to any one of claims **1 to 4, characterized in that** the locking device is also designed to block the pivoting of the chassis (1) relative to the steering assembly (2, 3, 4) around the pivot axis (6) when the vehicle is in the folded configuration.

6. The vehicle according to any one of claims **1 to 5,** characterized the chassis (1) is connected to the steering assembly (2, 3, 4) via a connecting element (5) having a first end (5a) connected to the steering column (2) and a second end (5b) pivotably connected to the chassis (1) around the pivot axis (6).

7. The vehicle according to claim **6, characterized in that** in the usage configuration, the front portion (1b) is arranged substantially parallel to the connecting element (5).

8. The vehicle according to any one of claims **6** and **7, characterized in that** in the folded configuration, the front portion (1b) forms a non-zero and non-flat angle with the connecting element (5), preferably an angle between 60° and 100°, or between 85° and 95°.

9. The vehicle according to any one of claims **1 to 8, characterized in that** the locking device (7) is arranged to automatically allow blocking of the pivoting, when the usage configuration is reached and/or when the folded configuration is reached.

10. The vehicle according to any one of claims **1 to 9** and to claim **6, characterized in that** the unlocking means (7) cooperates with the steering assembly (2, 3, 4) via the connecting element (5).

11. The vehicle according to any one of claims **1 to 10, characterized in that** the unlocking means comprises at least one actuator, such as a push button, preferably arranged in the upper portion of the steering assembly (2, 3, 4).

12. The vehicle according to any one of claims **1 to 11, characterized in that** the unlocking means comprises a remote control.

13. The vehicle according to any one of claims **1 to 12, characterized in that** the unlocking means comprises a pedal (7) arranged at the front portion (1b) of the support part and is actionable by the user's foot so that an action of the user's foot on the pedal causes the chassis first to unlock, then to pivot.

14. The vehicle according to any one of claims **1 to 13, characterized in that** the front portion (1b) of the chassis (1) constitutes, in the folded configuration, a support element on a support surface for the vehicle.

15. The vehicle according to any one of claims **1 to 14, characterized in that** the steering column (2) supports, by one of its two ends, at least one moving part (4), such as a wheel (4) or rolling skate, able to be in contact with a support surface and to allow the vehicle to move on said support surface when said vehicle is set in motion.

16. The vehicle according to any one of claims **1 to 15, characterized in that** the chassis (1) supports, preferably by its end opposite the front portion (1b), at least one moving part (9), such as a wheel (9) or rolling skate, able to be in contact with a support surface and to allow the vehicle to move on said support surface when said vehicle is set in motion.
